(19) Europäisches Patentamt
European Patent Office
Office européen des brevets

(11) **EP 2 317 335 B1**

(12) **EUROPEAN PATENT SPECIFICATION**

(45) Date of publication and mention
of the grant of the patent:
**25.07.2012 Bulletin 2012/30**

(51) Int Cl.:
***G01S 7/52*** *(2006.01)*     ***G10K 11/34*** *(2006.01)*

(21) Application number: **09425431.5**

(22) Date of filing: **27.10.2009**

(54) **Improved beamforming method for analysing signals received by a transducer arrray, and relative detection system**

Verbessertes Strahlenbündelungsverfahren zur Analyse von Signalen, die von einer Wandleranordnung empfangen wurden, und entsprechendes Erfassungssystem

Procédé de formation de faisceaux amélioré pour analyser les signaux reçus par un réseau de transducteur et système de détection associé

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**04.05.2011 Bulletin 2011/18**

(73) Proprietor: **Whitehead Sistemi Subacquei S.p.A.**
**57124 Livorno (LI) (IT)**

(72) Inventor: **Nigro, Vincenzo**
**81030 Castelvolturno (IT)**

(74) Representative: **Nannucci, Lorenzo et al**
**Studio Torta S.p.A.**
**Via Viotti, 9**
**10121 Torino (IT)**

(56) References cited:
**EP-A2- 1 103 950**    **CN-A- 101 470 195**

• **CHI SEO ET AL: "Sidelobe suppression in ultrasound imaging using dual apodization with cross-correlation" IEEE TRANSACTIONS ON ULTRASONICS, FERROELECTRICS AND FREQUENCY CONTROL, IEEE, US LNKD- DOI: 10.1109/TUFFC.919, vol. 55, no. 10, 1 October 2008 (2008-10-01), pages 2198-2210, XP011235809 ISSN: 0885-3010**
• **BÜLENT TAVLI ET AL: "Correlation Processing for Correction of Phase Distortions in Subaperture Imaging" IEEE TRANSACTIONS ON ULTRASONICS, FERROELECTRICS AND FREQUENCY CONTROL, IEEE, US LNKD- DOI: 10.1109/58.808871, vol. 46, no. 6, 1 November 1999 (1999-11-01), pages 1477-1488, XP011090153 ISSN: 0885-3010**

# Description

The present invention relates to an improved beamforming method for analysing signals received by a transducer array, and to a relative detection system. In the following description, specific reference is made to use of the method for analysing underwater sonar signals, but the method also applies equally to a wide range of other applications, as described herein.

Underwater vehicles, both manned (e.g. submarines) and unmanned (e.g. torpedoes), employ sonar devices to detect and locate targets in the surrounding area, such as surface or underwater vessels, artificial targets, or obstacles of various types.

Sonar devices are divided into two types : active (which emit signals and analyse the echo produced by target reflection of the signals) and passive (which simply listen for acoustic signals emitted by a target); and the signal processing circuits of the devices normally employ beamforming techniques to detect targets (or acquire spatial information about the surrounding area in general).

As is known, beamforming is a particular signal processing technique that employs an appropriate group (so called "array") of directional signal transmitting or receiving transducers organized in suitable arrangements (e.g. linear or planar arrays). Being relative to the present invention, specific reference is made herein to beamforming employed in the reception of signals from an emission source in the surrounding area.

Being separate in space and arranged in a given configuration, a signal from the source reaches the transducers in the array at different times and with different phases, the time delays and phase differences depending on the direction from which the signal originates. Beamforming constructively exploits the interference phenomena produced by combining the signals received by the transducers in the array, to modify receiving directivity.

More specifically, beamforming scans the surrounding area in a number of pointing directions, each corresponding to the formation of a respective beam. For each beam, a linear transformation is performed of the signals received by the transducers in the array, which are first weighted and "aligned" in the corresponding pointing direction (i.e. delayed in time or rephased in frequency) and then added to obtain information about the signal energy received in the pointing direction. This information is then processed, e.g. by comparing it with a detection threshold, to determine the presence of a target in the pointing direction. Sonar using this so-called "sonar multibeam" technique may, for example, scan a roughly 96° sector with thirty beams equally spaced 3.2° apart.

Various beamforming techniques are known, which differ according to the way in which the signals received by the transducer array are combined : conventional beamforming, for example employs fixed parameters (in terms of weighting, phase difference or time delay) to combine the signals received by the transducer array; whereas adaptive beamforming provides for adapting parameters according to the characteristics of the environment and the signals received by the transducers, and generally performs better than conventional beamforming, provided additional assumptions concerning the input signal are valid (these assumptions affect the structure of the beamformer, and any deviation from them by the signal impairs performance).

Whichever the case, after each beam is synthesized (relative to the corresponding pointing direction), any signals received from other than the pointing direction are attenuated according to a given beam pattern (or radiation graph) illustrating the global response of the array according to the arrival direction of the received signals. More specifically, the beam pattern has a main lobe corresponding to the maximum-reception direction, which coincides with the pointing direction of the preformed beam; and a number of secondary lobes corresponding to directions other than the pointing direction, and along which signals are received, even if attenuated according to the beam pattern.

Beamforming performance can be assessed in terms of the characteristics of the secondary beam pattern lobes

- which introduce a noise component that impairs the directivity of the receiver, and which should ideally be nil or at least negligible with respect to the main lobe

- and the characteristics of the main lobe - which should be as narrow as possible to enhance the directivity of the receiver. These characteristics determine the angular resolution of the transducer array and the signal/noise ratio (where "noise" is intended to mean a disturbance of any kind - e.g. environmental, reverberation, or by a countermeasure - that may impair reception of the acoustic signal from the target and produce false alarms).

Beamforming performance, and in particular the shape and size of the secondary beam pattern lobes, can be improved, not only by working on the weighting and combination of the data received by the transducer array, but also by increasing the size of the array for a given operating band. Definite system size and cost issues, however, limit the extent to which the number of transducers and the size of the array can be increased.

The applicant has determined various limitations and problems affecting conventional beamforming techniques applied to sonar systems, and which may result in false or delayed target detection. These include :

- an overly wide main beam pattern lobe; techniques in which each transducer is weighted by multiplying the relative signal by a given coefficient (so-called array window) on the one hand reduce the size of the side lobes, but on the other increase the width of the main lobe, which is roughly 20-30% wider than the natural lobe obtained without weighting the transducers;

- a far from negligible secondary beam level, due to impairment of the signal/noise ratio and only partial attenuation of any interference signals;
- poor target detection performance in less than perfectly isotropic noise environments; and
- poor weak-target detection in countermeasure-saturated environments.

In general, conventional beamforming performance lessens as conditions depart from the ideal defined by one target and Gaussian isotropic noise in the surrounding environment.

Adaptive processing, on the other hand, depends on the validity of the assumptions made at the outset concerning the nature of the signal, and which are frequently affected by changing environmental, particularly underwater, conditions.

Chi Seo et al., "Sidelobe suppression in ultrasound imaging using dual apodization with cross-correlation", IEEE Transactions on Ultrasonics, Ferroelectrics and Frequency Control, IEEE, US LNKD-DOI: 10.1109/TUFFC.919, vol. 55, no. 10, 1 October 2008, pages 2198-2210, discloses a beamforming method envisaging the determination of a cross-correlation between the signals received, after being subject to two different apodization functions; the cross-correlation being calculated on a given number of time samples of the received signals.

It is an object of the present invention to eliminate some or all of the limitations typically associated with known beamforming techniques, by providing an algorithm capable of "withstanding" changes in environment, and which is easy to implement computation-wise.

According to the present invention, there are provided a beamforming method and relative detection system, as defined in Claims 1 and 13 respectively.

A number of non-limiting embodiments of the invention will be described by way of example with reference to the accompanying drawings, in which:

Figure 1 shows, schematically, one possible application of the beamforming method in accordance with one aspect of the present invention;

Figure 2 shows an operation flow chart of the beamforming method operating in the frequency domain;

Figure 3 shows a rough block diagram of an example portion of a detection system implementing the beamforming method in the frequency domain;

Figure 4 shows, schematically, a linear array of electroacoustic transducers;

Figure 5 shows the beampattern of a beam aimed perpendicularly to the Figure 4 array, and relative to a conventional beamforming algorithm (dash line) and the beamforming method according to the present invention (continuous line).

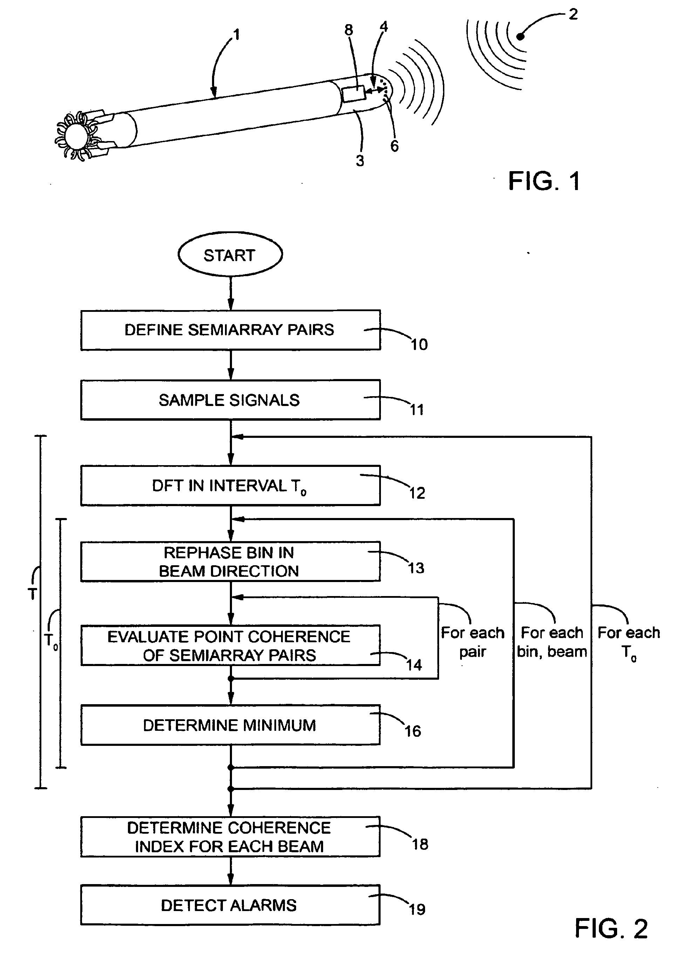

Figure 1 shows, schematically, one possible application of the beamforming method, in accordance with one aspect of the present invention, in which an underwater vehicle, in particular a torpedo 1, is engaged in detecting a target, e.g. a countermeasure 2, in an underwater environment.

Torpedo 1 has an acoustic head 3 equipped with a sonar system 4, e.g. an active sonar system, which emits sound waves (sonar pulses) and receives reflected waves (echoes) from the target to detect and locate the target.

More specifically, sonar system 4 comprises : an array of electroacoustic transducers 6 in a desired configuration (e.g. 82 transducers in a planar configuration - not shown); and a processing unit 8 connected functionally to electroacoustic transducers 6, and which processes the signals received by the transducers by means of an innovative algorithm (described in detail below) to detect the target. Accordingly, processing unit 8 is equipped with a program containing code portions and software instructions for implementing the innovative beamforming algorithm.

The beamforming method employed by processing unit 8 of sonar system 4 will now be described in detail with reference to Figure 2, which shows, by way of example, implementation of the method in the frequency domain by Fourier transform. The beamforming method, however, may also be applied to advantage, in a manner not shown, in the time domain, working on the time delays as opposed to phases (as explained below).

The beamforming method comprises a preliminary step 10 of defining a given number $M_0$ of pairs of semiarrays (i.e. groups of respective halves of the elements in the original array) from combinations of electroacoustic transducers 6 in the array. Given an array of K elements, the total number $M_0$ of possible combinations of pairs of semiarrays defined by different K/2 elements equals :

$$\frac{1}{2}\binom{K}{K/2}$$

Though the benefits of the method can generally be maximized considering all the possible semiarray pair combinations, a smaller number may be considered to reduce the computing load of processing unit 8 (e.g. in the case of an array with a large number of electroacoustic transducers 6 and, hence, a large number of possible combinations).

One way of reducing the number of semiarray pair combinations is to arbitrarily define specific subgroups of a given number (less than K/2) of elements from the transducers in the array, and to create the semiarray pairs from combinations of these subgroups (considered undividable). Given an array of K elements and specific subgroups of J arbitrarily selected elements, the subgroups give a number $M_0$ of semiarray pairs of :

$$\frac{1}{2}\binom{K/J}{K/(2 \cdot J)}$$

For example, an 82-transducer array and specific groups of 10/11 elements give 8 subgroups (N.B. the groups need not necessarily all have the same number of elements, as in this case, which has two groups of 11 and six groups of 10 elements). Generating the semiarrays from combinations of these subgroups gives 35 semiarray pairs with which to implement the beamforming method (N.B. computation would be far more intensive if all the combinations of semiarray pairs formed from the 82 elements in the original array were to be considered).

The preliminary step is followed by a step 11, in which, after being preconditioned, if necessary, i.e. preamplified and possibly demodulated and filtered, the signals received by electroacoustic transducers 6 are sampled at a given sampling rate $f_c$ and divided into analysis intervals $T_0$, each containing a given number N of digital samples : $T_0 = N/f_c$.

The method also provides that the received signals be processed within an observation time T corresponding, for example, to a period in which the received signals may be considered stationary (i.e. to an interval in which the signals are coherent). Observation time T may correspond to the length of the sonar pulse emitted by sonar system 4, in the case of an active sonar, or, in the case of a passive sonar, to a stationary interval that can be calculated beforehand as a function, for example, of the dynamics involved.

When operating in frequency (it being understood that the method applies to various beamforming techniques, such as time-operating "delay and sum"), the beamforming method comprises a step 12 of performing, for each analysis interval $T_0$, a discrete Fourier transform (DFT) of the signals received by electroacoustic transducers 6, with the N number of digital samples. The DFT is performed, for example, with Hanning window weighting, though the method also applies regardless of the type of weighting.

When operating in time, on the other hand, no transform is performed, and the time samples of the signals of electroacoustic transducers 6 are considered: the samples are real numbers, or complex numbers in the event of heterodyne demodulation.

The DFT is performed in a band B of interest, which includes a given number of frequency bins, each of a bandwidth $\Delta f$ of $f_c/N$, and over each of which the beam pattern may be considered constant (the beam pattern, in fact, varies in known manner with frequency). For each frequency bin, the DFT result comprises a complex number (phasor) of a given amplitude and phase. The method is not bound by the width of band B of interest, which is determined, for example, by signal propagation mode and permissible geometric dimensions. In the case of an active sonar, it also depends on the frequency characteristics of the signals emitted, and, in the case of a passive sonar, on the frequency characteristics of the pickup signal (which depend on target characteristics).

In each analysis interval $T_0$ of observation time T, the method repeats a number of processing operations for each frequency bin in band B; and all the operations are repeated for each beam formed (and the relative pointing directions). When operating in the time domain, on the other hand, the processing operations are repeated for each time sample in analysis interval $T_0$.

More specifically - step 13 - for each beam to be formed and for each frequency bin of analysis interval $T_0$, the phasors of electroacoustic transducers 6 are rephased in the formed beam pointing direction (in known manner, by affecting a given phase shift, depending on the pointing direction) to obtain a number of rephased phasors, one for each electroacoustic transducer 6. Similarly, time-domain transducers can be aligned. For example, the signals may be aligned by introducing time delays as a function of the signal arrival direction ("delay and sum" method). Generally speaking, various beamforming techniques apply at this stage, and, in each case, the proposed algorithm applies beamforming to the subgroups of electroacoustic transducers 6 defined at preliminary step 10.

At this point - step 14 - according to the present invention, the coherence - in terms of the signals received by relative electroacoustic transducers 6 - of the semiarrays in each of the previously defined pairs is evaluated.

More specifically, for each semiarray pair, the rephased phasors of all the electroacoustic transducers 6 in each semiarray are added to obtain two resultant phasors having respective amplitudes $A_1$, $A_2$ and a mutual phase shift $\varphi$. The correlation between the resultant phasors is then evaluated by calculating the scalar product :

$$\sqrt{A_1 \cdot A_2 \cdot \cos\varphi}$$

Once again, when operating in time, a product of real numbers, or of phasors, may be calculated in the event of heterodyne demodulation.

According to one aspect of the invention, the result, which represents a correlation value of the semiarrays in the pair, is then normalized ("clipped") to a given normalization value, e.g. of 1, if positive, or 0 (or, according to a variation, a very small or nearly 0 lower limit value), if negative. Alternatively, if positive, the result of the scalar product may be left unchanged.

The scalar product result is positive when there is a certain degree of coherence of the signals received by electroacoustic transducers 6 in each semiarray, and is negative when there is no coherence of the signals. More specifically, negative values are caused by interference sources outside the view angle of the formed beam, the effect of which on beamforming is advantageously eliminated by zeroing the relative scalar product result. In other words, evaluating coherence of the signals received by electroacoustic transducers 6 in each semiarray pair provides for discriminating between a coherent signal with the pointing direction of the formed beam in observation time $T_0$ (which, as such, is received the same way in both semiarrays, i.e. producing resultant phasors with absolute phase shifts of 90° or less), and a random signal (representing noise of any sort).

Step 14 is then repeated for each of the $M_0$ semiarray pairs, to obtain a respective, possibly normalized, correlation value as the result of the resultant phasor scalar product. Step 16 then determines the lowest of the $M_0$ correlation values so obtained, which represents a point coherence value of the signals received for the beam formed in that specific analysis interval $T_0$ and that specific frequency bin (or specific sampling instant, if operating in the time domain).

For each beam formed, steps 12, 13, 14 and 16 are then repeated for all the frequency bins in band B of interest (or for all the sampling instants in analysis interval $T_0$, if operating in the time domain), obtaining respective point coherence values. All the operations described are repeated for all the analysis intervals $T_0$ in observation time T (the algorithm returning to step 12), to obtain, for each beam at the end of observation time T, a number of point coherence values equal to :

$$\left(\frac{T}{T_0}\right)\cdot\left(\frac{B}{\Delta f}\right)=\frac{T\cdot f_c}{N}\cdot\frac{BN}{f_c}=T\cdot B$$

In the time domain, the number of point coherence values equals : $T\cdot(N/T_0)=T\cdot f_c$

Step 18 in the method (a detection step, after observation time T) then determines a coherence index indicating the degree of coherence of the signals received by electroacoustic transducers 6 in observation time T, in band B of interest, and in each pointing direction. More specifically, the number of point coherence values above zero is determined for each beam formed.

The coherence index represents, for each beam, the result of the innovative beamforming algorithm, and, as calculated, is a positive whole value of 0 to BT, when operating in the frequency domain, and of 0 to $f_c T$ when operating in the time domain. Again, the point coherence values are combined (or "integrated") in a coherence interval in which the received signals are considered stationary or coherent with the beam pointing direction.

The beamforming method described may comprise additional processing steps to determine targets (or alarms) in the surrounding area on the basis of the coherence indexes evaluated in the pointing directions.

Accordingly - step 19 - the coherence indexes in the pointing directions are, for example, compared with a threshold value, and a target is detected when the indexes exceed the threshold value.

In this connection, it should be pointed out that, by virtue of the preceding normalization steps, the acoustic panorama obtained as a result of the beamforming algorithm is automatically normalized, and the so-called CFAR (Constant False Alarm Rate) process is implemented automatically. In other words, a constant threshold value for target detection can be used, regardless of variations in environmental noise.

For a clearer understanding, the beamforming method described will now be described with reference to an operating block diagram of processing unit 8 of sonar system 4, and a highly simplified example comprising four electroacoustic transducers 6, two frequency bins (freq1, freq2) in band B of interest, and one analysis interval $T_0$ in observation time T (the method operating, in this case, in frequency).

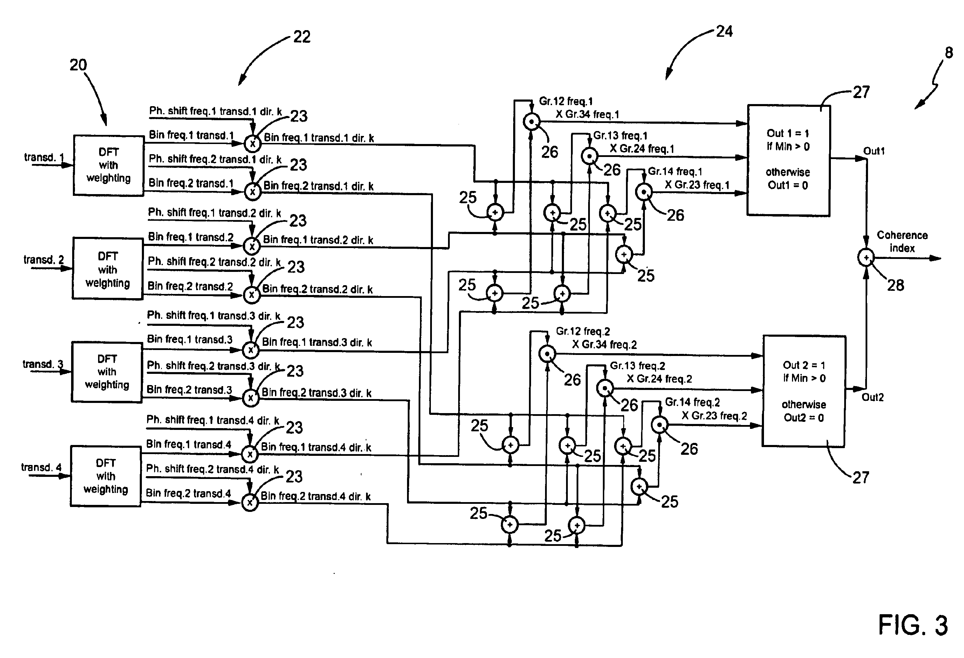

As shown in Figure 3, processing unit 8 comprises a DFT processing stage 20 which, from each electroacoustic transducer 6, acquires the signals received by it in analysis interval $T_0$, sampled at sampling frequency $f_c$. DFT processing stage 20 performs the discrete Fourier transform with weighting of the signals, to generate, for each electroacoustic transducer 6, the phasors (modulus and phase) relative to frequency bins freq1, freq2.

Processing unit 8 also comprises a rephasing stage 22 connected to the output of DFT processing stage 20 to rephase the above phasors as a function of the pointing direction k of the formed beam. More specifically, rephasing stage 22 comprises, for each output of DFT processing stage 20, a product block 23 for calculating the product (in complex numbers) of a respective phasor and an appropriate phase shift to be applied to respective frequency bin freq1, freq2, and for generating a respective phasor aligned in pointing direction k.

The processing unit also comprises a coherence stage 24 connected to the output of rephasing stage 22 to determine the point coherence value in analysis interval $T_0$ (here simplified to coincide with observation time T) of each frequency bin freq1, freq2, and to determine (at a data post-processing step) the coherence index of the formed beam, by combining the point coherence values in observation time T (here simplified to coincide with analysis interval $T_0$).

More specifically, coherence stage 24 comprises : a number of adding blocks 25 (specifically, six for each frequency bin freq1, freq2) for adding (in modulus and phase) the rephased phasors associated with electroacoustic transducers 6 in all the groups (in this case, semiarrays) into which the sonar system 4 array can be divided, and for generating corresponding resultant phasors; and a number of scalar product blocks 26 (specifically, three for each frequency bin freq1, freq2) for calculating the scalar product of the resultant phasors relative to all the possible semiarray pair combinations, and for generating the relative correlation values.

Coherence stage 24 also comprises a minimum unit 27 for each frequency bin freq1, freq2. Minimum unit 27 receives the results of the scalar products calculated by scalar product blocks 26, determines the minimum correlation value, and generates a normalized value representing the point coherence of respective frequency bin freq1, freq2, analysis interval $T_0$, and pointing direction k (in the example shown, the normalized value is 1 if the minimum is greater than 0, and is 0 if the minimum is less than 0).

Coherence stage 24 also comprises an output adding block 28, which receives the point coherence values from minimum unit 27, and adds them to generate the coherence index relative to the formed beam (and to the relative pointing direction k) as described in detail above.

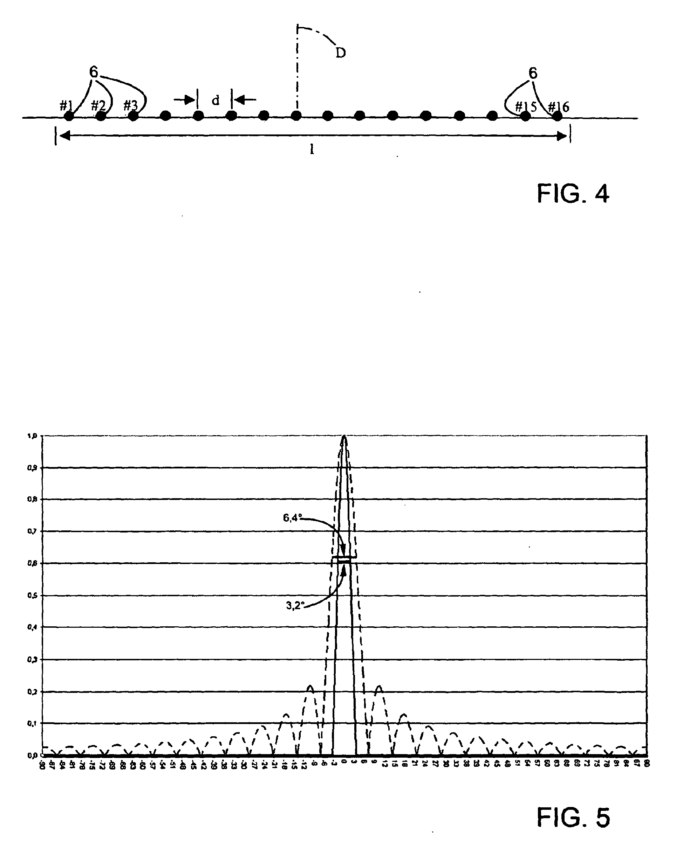

The results of the innovative beamforming algorithm were tested by the Applicant, among other things, using a linear array of length 1, and comprising sixteen electroacoustic transducers 6 arranged in a straight line and equally spaced a distance d apart, as shown schematically in Figure 4. More specifically, the beam pattern (or radiation graph) relative to an pointing direction D perpendicular to the extension direction of the array was determined, and the results of the innovative method were compared with those of a conventional beamforming method (with uniform, constant weighting of the signals received by electroacoustic transducers 6). In determining the beam pattern, a spot source, oscillating at a given frequency of a constant value, a long distance from the array, was also taken into account.

Figure 5 shows the beam pattern obtained using a conventional beamforming method (dash line), and the beam pattern obtained using the innovative method (continuous line). In Figure 5, the x axis shows the departure angle, from -90° to +90°, of the spot source a long distance from the array, and the y axis shows the attenuation level, from 0 to 1 and normalized with respect to a maximum level, of the signals received from the source.

Comparison of the two patterns shows :

- the main lobe in the innovative beamforming method is substantially half the width - in the example shown, 3.2° - of the main lobe in the conventional beamforming method - in the example shown, 6.4°; and
- unlike conventional beamforming, the beam pattern of the innovative beamforming method shows substantially no secondary lobes.

In other words, compared with conventional beamforming, the innovative beamforming method can be shown (by computer simulation) to improve the signal/noise ratio up to 15/20 dB (because of the substantial absence of secondary lobes and the narrower main lobe), and to improve angular resolution (again, because of the narrower main lobe).

The advantages of the beamforming method according to the present invention will be clear from the above description.

In particular, as stated, there is a big improvement in signal/noise ratio and angular resolution as compared with conventional methods, which means, for example, threats can be detected at a greater distance and classified more accurately (thus improving target detection and reducing the likelihood of false alarms). Also, unlike adaptive beamforming methods, for example, the algorithm proposed is robust enough to operate with no particular restrictions as regards the input signals.

The innovative beamforming algorithm also has the following advantages:

- definition of a coherence index (in the form of a positive whole number) which measures the degree of correlation of the signals received by electroacoustic transducers 6 in the pointing direction of the formed lobe; computer simulation shows the coherence index is practically constant with respect to noise level and type (isotropic or not), which means even greater performance can be achieved by increasing the number of independent findings (in terms of point coherence value), i.e. increasing (when operating in frequency) the band B-observation time T product (N.B. with conventional beamforming methods, this is at most only achievable with isotropic noise):

- in the innovative beamforming method, the acoustic panorama is normalized automatically, thus automatically implementing the CFAR (Constant False Alarm Rate) process, and enabling constant-threshold target detection and automatic adaptation to the characteristics of the noise environment;

- the possibility of discarding, in time and frequency, findings with negative preformed-lobe levels (unlike conventional beamforming, whose result is an energy level, the innovative beamforming method has both positive and negative values); this provides for excellent angular separation in the case of single-frequency, sweep or spot interference sources, and good performance with respect to wide-band disturbance devices (e.g. targets can be detected with a signal power/interference power level of even less than 50 dB in the presence of jammer-type countermeasures);

- high performance with respect to pulsating noise, which generates negative preformed-lobe levels which are excluded from the calculation; and

- the algorithm can be implemented in numerous different ways, to improve performance using greater computing power (for arrays with a large number of electroacoustic transducers 6, for example, there are numerous ways of determining the element groups, in particular the semiarray pair combinations, on which the algorithm is executed.

The marked improvement in performance of the innovative beamforming method enables the use of arrays with far fewer transducers (in the case of planar arrays, roughly 25% fewer than conventional systems) but with the same, if not better, performance as conventional systems. Using fewer transducers reduces the cost of the array and of receiving, computing, and processing electronics.

The innovative algorithm can be applied to advantage, with no major hardware alterations, to any detection system involving digital acquisition of transducer-received signals (regardless of the type of array).

Clearly, changes may be made to the method as described and illustrated herein without, however, departing from the scope of the present invention, as defined in the accompanying Claims.

In particular, as stated, in addition to the sonar system described, the beamforming method according to the present invention may be employed to advantage in a wide range of other fields - in particular, any system involving the use of transducer arrays and digital acquisition of transducer-received signals - such as radar, seismology, wireless communication, radio astronomy and biomedicine. In wireless communication, the advantages of the innovative method may be exploited to achieve a given signal quality with less power transmission, and so reduce electromagnetic pollution. In radio astronomy, higher-performance telescopes can be developed. And, in biomedicine, systems could be developed employing lower-intensity radiation for a given image quality, to reduce the invasiveness of diagnostic procedures, such as radiology.

In the case of active sonars, the known characteristics of the transmitted (and, therefore, target-reflected) signal can be used to reduce noise and so improve the signal/noise ratio. For example, in the case of so-called "frequency sweeps", i.e. transmission of sonar pulses with a ramplike time-frequency pattern, the beamforming method may coherence-check the array element groups, not for all the frequency bins, but only those involved in the frequency sweep (i.e. in which a useful signal may be expected). More specifically, in each analysis interval $T_0$, using the known frequency content of the useful incoming signal, the method may process the signals received by electroacoustic transducers 6, to determine the point coherence values, only in specific frequency bins corresponding to the known frequency content.

The normalization step, when determining coherence of the received signals, is advantageous when target detection is required (as in the case of sonar or radar systems), but may be omitted (e.g. in the case of an image-forming system, as in a television camera) when incoming signal level information is also of interest. In which case, the point coherence processing results (in the example described, the scalar products of the resultant phasors of the semiarrays) are not normalized to one (if positive), but are left unchanged at their respective levels. In which case, the coherence index equals the sum of the point coherence values determined for each frequency bin in each analysis interval $T_0$.

Though the above description refers specifically to a preferred embodiment in which the array is divided into semiarrays (each of half the elements in the array), generally speaking, the array may be divided into a number of subgroups (each of other than half the elements in the array), and again a given number of combinations of subgroups determined so that together they form the whole array. In this case, too, the signal coherence of the subgroups in each combination can be determined to obtain point coherence values (by which to generate the coherence index as the beamforming algorithm result). In this case, coherence may also be determined by comparing the amplitude and phase characteristics of the phasors resulting from rephasing the signals received by electroacoustic transducers 6 in each subgroup in the pointing direction of the beam formed.

Combining the signals in the groups of electroacoustic transducers 6 into which the array is divided may also comprise known adaptive weighting and rephasing techniques.

In substantially the same way, the beamforming method described may be applied wholly in time, as opposed to frequency (as described above). For example, the steps in the method may remain substantially unchanged, except that : the received signals are delayed in time in known manner to align them in the pointing direction of the formed beam, and are added to determine resulting signals for each semiarray (or group of elements in general); and determining the point coherence of the signals in the semiarrays (or groups of elements in general) may comprise determining temporal cross-correlation of the resulting signals.

**Claims**

1. A beamforming method for analysing signals received by an array of transducers (6), by forming a number of beams, each beam corresponding to a respective pointing direction, **characterized by** comprising the steps of:

   dividing said array of transducers (6) into a number of subgroups; and
   defining a given number $M_o$, higher than one, of combinations of said subgroups, each of said combinations of subgroups being such as to form said array as a whole;
   providing time or frequency samples of the signals received by the transducers (6) of said array in a given observation time (T), including a given number of analysis time intervals ($T_0$), the time or frequency samples referred to respective sampling instants or frequency bins;

and, for each of said analysis time intervals ($T_0$) and for each beam being formed, the steps of:

aligning the time or frequency samples in the pointing direction of said beam being formed, and combining the aligned time or frequency samples of the signals received by the transducers (6) in each said subgroup of each said combination to supply respective time or frequency resulting signals;

making coherence evaluations of the resulting signals of the subgroups in each said combination, by determining, for each said combination, a correlation value between the resulting signals of the respective subgroups, evaluated at each sampling instant or frequency bin in each said analysis time interval ($T_0$) of said observation time (T), and determining the minimum correlation value of the combinations to supply a point coherence value for each sampling instant or frequency bin in each said analysis time interval ($T_0$) of said observation time (T); and

determining a beamforming level of said beam being formed, as a function of the point coherence values supplied by said coherence evaluations.

2. The method as claimed in claim 1, wherein said step of determining a beamforming level also comprises combining the point coherence values supplied by said coherence evaluations for each sampling instant or frequency bin in each said analysis time interval ($T_0$) of said observation time (T).

3. The method as claimed in Claim 1 or 2, wherein said observation time (T) corresponds to a time in which the signals received by said transducers (6) are stationary, i.e. coherent.

4. The method as claimed in any of the preceding claims, wherein said step of determining a correlation value also comprises normalizing said point coherence value to zero, when said point coherence value is negative.

5. The method as claimed in claim 4, wherein said step of determining a correlation value also comprises normalizing said point coherence value to an upper limit value, when said point coherence value is positive.

6. The method as claimed in claim 5, wherein said upper limit value equals one.

7. The method as claimed in any one of the preceding claims, wherein said step of determining a beamforming level comprises adding together the point coherence values supplied by said coherence evaluations for each sampling instant or frequency bin in each said analysis time interval ($T_0$) of said observation time (T).

8. The method as claimed in any one of the preceding claims, comprising sampling said signals received by the transducers (6) in said array at a given sampling frequency ($f_c$).

9. The method as claimed in any one of the preceding claims, comprising executing a discrete Fourier transform of the signals received by the transducers (6) in said array in each analysis time interval ($T_0$) with a given frequency band (B) including a given number of frequency bins (freq1, freq2); and wherein each of said frequency samples corresponds to a given frequency bin (freq1, freq2) of said discrete Fourier transform.

10. The method as claimed in claim 9, wherein said step of determining a beamforming level comprises determining the number of said point coherence values within said observation time (T) and said frequency band (B) which are positive.

11. The method as claimed in any of the preceding claims, wherein said step of determining a correlation value comprises determining a scalar product of said resulting signals of the subgroups in each said combination.

12. The method as claimed in any one of the foregoing claims, wherein said subgroups are semiarrays, each comprising half of said transducers (6) in said array; and wherein said combinations of said subgroups are all the possible pairs of said semiarrays.

13. A detection system (4), in particular a sonar system, comprising a processing device (8) configured to implement the steps in the method as claimed in any one of the preceding claims.

14. The system as claimed in Claim 13, wherein said processing device (8) is also configured to detect a target (2) on the basis of a comparison of said beamforming level with a threshold value.

15. A system as claimed in claim 14, wherein said threshold value is constant.

**Patentansprüche**

1. Strahlformungsverfahren zur Analyse von Signalen, die von einer Anordnung von Wandlern (6) empfangen werden, indem eine Anzahl von Strahlen geformt wird, wobei jeder Strahl einer Richtung entspricht, **dadurch gekennzeichnet, dass** es die Schritte umfasst:

- Teilen der Anordnung von Wandlern (6) in eine Anzahl von Untergruppen; und
- Definieren einer vorgegebenen Anzahl, die größer als 1 ist, von Kombinationen von Untergruppen, wobei jedes der Kombinationen von Untergruppen die Anordnung als Ganzes darstellt;
- Bereitstellen von Zeit- oder Frequenz-Sample der von den Wandlern (6) der Anordnung empfangenen Signale in einer gegebenen Beobachtungszeit (T), umfassend eine gegebene Anzahl von Analysezeitintervallen ($T_0$), wobei sich die Zeit- oder Frequenz-Sample auf jeweilige Abtastzeitpunkte oder Frequenzlinien beziehen;

und dass es für jedes der Analysezeitintervalle ($T_0$) und jeden geformten Strahl die Schritte unfasst:

- Ausrichten der Zeit- oder Frequenz-Sample in die Richtung des geformten Strahls, und Kombinieren der ausgerichteten Zeit- oder Frequenz-Sample der von den Wandlern (6) empfangenen Signale in jeder Untergruppe einer jeden Kombination, um resultierende Zeit- oder Frequenzsignale bereitzustellen;
- Durchführen von Kohärenzevaluierungen der resultierenden Signale der Untergruppen in jeder Kombination, indem für jede Kombination ein Korrelationswert zwischen den resultierenden Signalen der jeweiligen Untergruppen bestimmt wird, wobei die Evaluierung an jedem Abtastzeitpunkt oder jeder Frequenzlinie in jedem Analysezeitintervall ($T_0$) der Beobachtungszeit (T) durchgerührt wird, und Bestimmten eines minimalen Korrelationswerts der Kombinationen, um einen Punktkohärenzwert für jeden Abtastzeitpunkt oder jede Frequenzlinie in jedem Analysezeitintervall ($T_0$) der Beobachtungszcit (T) bereitzustellen; und
- Bestimmen eines Strahlformungslevels des geformten Strahls als Funktion der Punktkohäreazwerte, die durch die Kohärenzevaluierungen bereitgestellt werden.

2. Verfahren nach Anspruch 1, wobei der Schritt des Bestimmens eines Strahlformungslevels weiter das Kombinieren der durch die Kohärenzevaluierungen bereitgestellten Punktkohärenzwerte für jeden Abtastzeitpunkt oder jede Frequenzlinie in jedem Analysezeitintervall ($T_0$) der Beobachtungszeit (T) umfasst.

3. Verfahren nach Anspruch 1 oder 2, wobei die Beobachtungszeit (T) einer Zeit entspricht, in der die von den Wandlern (6) empfangenen Signale stationär, also kohärent sind.

4. Verfahren nach einem der vorstehenden Ansprüche, wobei der Schritt des Bestimmens eines Korrelationswerts weiter ein Normalisieren des Punktkohärenzwerts auf Null umfasst, wenn der Punktkohärenzwert negativ ist.

5. Verfahren nach Anspruch 4, wobei der Schritt des Bestimmens eines Korrelationswerts weiter ein Normalisierten des Punktkohärenzwerts auf einen oberen Grenzwert umfasst, wenn der Punktkohärenzwert positiv ist.

6. Verfahren nach Anspruch 5, wobei der obere Grenzwert gleich 1 ist.

7. Verfahren nach einem der vorstehenden Ansprüche, wobei der Schritt des Bestimmens eines Strahlformungslevels ein Addieren der durch die Kohärenzevaluierungen bereitgestellten Punktkohärenzwerte für jeden Abtastzeitpunkt oder jede Frequenzlinie in jedem Analysezeitintervall ($T_0$) der Beobachtungszeit (T) umfasst.

8. Verfahren nach einem der vorstehenden Ansprüche, umfassend ein Abtasten der von den Wandlern (6) in der Anordnung empfangenen Signale bei einer gegebenen Abtastfrequenz ($f_c$).

9. Verfahren nach einem der vorstehenden Ansprüche, umfassend das Durchführen einer diskreten Fourieranalyse der von den Wandlern (6) in der Anordnung empfangenen Signale in jedem Analysezeitintervall ($T_0$) mit einen gegebenen Frequenzband (B), das eine gegebene Anzahl von Frequenzlinien (freq1, freq2) umfasst, wobei jedes der Frequenzmuster einer gegebenen Frequenzlinie (freq1, freq2) der diskreten Fourieranalyse entspricht.

10. Verfahren nach Anspruch 9, wobei der Schritt des Bcstimmens eines Strahlformimgslevels das Bestimmen einer Anzahl von positiven Punktkohärenzwerten innerhalb der Beobachtungszeit (T) und des Frequenzbandes (B) umfasst.

11. Verfahren nach einem der vorstehenden Ansprüche, wobei der Schritt des Bestimmens eines Korrelationswerts das Bestimmen eines Skalaqprodukts der resultierenden Signale der Untergruppen in jeder Kombination umfasst.

12. Verfahren nach einem der vorstehenden Ansprüche, wobei die Untergruppen Semianordnungen sind und jede die Hälfte der Wandler (6) in der Anordnung umfasst, und wobei die Kombinationen von Untergruppen alle möglichen Paare der Semianordnungen sind.

**13.** Erfassungssystem (4), insbesondere Sonarsystem, mit einer Verarbeitungsvorrichtung (8), die vorgesehen ist, um die Schritte des Verfahrens nach einem der vorstehenden Ansprüche auszuführen.

**14.** System nach Anspruch 13, wobei die Verarbeitungsvorrichtung (8) weiter vorgesehen ist, um ein Zielobjekt (2) auf Basis eines Vergleichs des Strahlformungslevels mit einem Schwellwert zu erfassen.

**15.** System nach Anspruch 14, wobei der Schwellwert eine Konstante ist.

**Revendications**

**1.** Procédé de formation de faisceau pour analyser des signaux reçus par un tableau de transducteurs (6), en formant plusieurs faisceaux, chaque faisceau correspondant à une direction de pointage respective, **caractérisé en ce qu'**il comprend les étapes suivantes :

diviser ledit tableau de transducteurs (6) en plusieurs sous-groupes ; et
définir un nombre donné $M_0$, supérieur à un, de combinaisons desdits sous-groupes, chacune desdites combinaisons de sous-groupes étant telle qu'elle forme ledit tableau dans son ensemble ;
prévoir des échantillons de temps ou de fréquence des signaux reçus par les transducteurs (6) dudit tableau sur un temps d'observation donné (T), incluant un nombre donné d'intervalles de temps d'analyse ($T_0$), les échantillons de temps ou de fréquence se rapportant à des instants d'échantillonnage ou des casiers de fréquence respectifs ;
et, pour chacun desdits intervalles de temps d'analyse ($T_0$) et pour chaque faisceau en formation, les étapes suivantes :

aligner les échantillons de temps ou de fréquence sur la direction de pointage dudit faisceau en formation, et combiner les échantillons de temps ou de fréquence alignés des signaux reçus par les transducteurs (6) dans chaque dit sous-groupe de chaque dite combinaison pour fournir des signaux résultants de temps ou de fréquence respectifs ;
effectuer des évaluations de cohérence des signaux résultants des sous-groupes dans chaque dite combinaison en déterminant, pour chaque dite combinaison, une valeur de corrélation entre les signaux résultants des sous-groupes respectifs, évalués à chaque instant d'échantillonnage ou chaque casier de fréquence sur chaque dit intervalle de temps d'analyse ($T_0$) dudit temps d'observation (T), et déterminer la valeur de corrélation minimale des combinaisons pour fournir une valeur de cohérence ponctuelle pour chaque instant d'échantillonnage ou chaque casier de fréquence sur chaque intervalle de temps d'analyse ($T_0$) dudit temps d'observation (T) ; et
déterminer un niveau de formation de faisceau dudit faisceau en formation, en fonction des valeurs de cohérence ponctuelle fournies par lesdites évaluations de cohérence.

**2.** Procédé tel que revendiqué dans la revendication 1, dans lequel ladite étape de détermination d'un niveau de formation de faisceau comprend en outre la combinaison des valeurs de cohérence ponctuelles fournies par lesdites évaluations de cohérence pour chaque instant d'échantillonnage ou chaque casier de fréquence sur chaque dit intervalle de temps d'analyse ($T_0$) dudit temps d'observation (T).

**3.** Procédé tel que revendiqué dans la revendication 1 ou 2, dans lequel ledit temps d'observation (T) correspond à un temps pendant lequel les signaux reçus par lesdits transducteurs (6) sont stationnaires, c'est-à-dire cohérents.

**4.** Procédé tel que revendiqué dans l'une quelconque des revendications précédentes, dans lequel ladite étape de détermination d'une valeur de corrélation comprend en outre la normalisation de ladite valeur de cohérence ponctuelle à zéro, lorsque ladite valeur de cohérence ponctuelle est négative.

**5.** Procédé tel que revendiqué dans la revendication 4, dans lequel ladite étape de détermination d'une valeur de corrélation comprend en outre la normalisation de ladite valeur de cohérence ponctuelle à une valeur limite supérieure, lorsque ladite valeur de cohérence ponctuelle est positive.

**6.** Procédé tel que revendiqué dans la revendication 5, dans lequel ladite valeur limite supérieure est égale à un.

**7.** Procédé tel que revendiqué dans l'une quelconque des revendications précédentes, dans lequel ladite étape de détermination d'un niveau de formation de faisceau comprend l'addition des valeurs de cohérence ponctuelles fournies par lesdites évaluations de cohérence pour chaque instant d'échantillonnage ou chaque casier de fréquence sur chaque dit intervalle de temps d'analyse ($T_0$) dudit temps d'observation (T).

8. Procédé tel que revendiqué dans l'une quelconque des revendications précédentes, comprenant l'échantillonnage desdits signaux reçus par les transducteurs (6) dans ledit tableau à une fréquence d'échantillonnage donnée ($f_c$).

9. Procédé tel que revendiqué dans l'une quelconque des revendications précédentes, comprenant l'exécution d'une transformée de Fourier discrète des signaux reçus par les transducteurs (6) dans ledit tableau sur chaque intervalle de temps d'analyse ($T_0$) avec une bande de fréquence donnée (B) incluant un nombre donné de casiers de fréquence (freq1, freq2) ; et dans lequel chacun des desdits échantillons de fréquence correspond à une casier de fréquence donné (freq1, freq2) de ladite transformée de Fourier discrète.

10. Procédé tel que revendiqué dans la revendication 9, dans lequel ladite étape de détermination d'un niveau de formation de faisceau comprend la détermination du nombre desdites valeurs de cohérence ponctuelles sur ledit temps d'observation (T) et ladite bande de fréquence (B) qui sont positives.

11. Procédé tel que revendiqué dans l'une quelconque des revendications précédentes, dans lequel ladite étape de détermination d'une valeur de corrélation comprend la détermination d'un produit scalaire desdits signaux résultants des sous-groupes dans chaque dite combinaison.

12. Procédé tel que revendiqué dans l'une quelconque des revendications précédentes, dans lequel lesdits sous-groupes sont des semi-tableaux, chacun comprenant la moitié desdits transducteurs (6) dans ledit tableau ; et dans lequel lesdites combinaisons desdits sous-groupes sont toutes les paires possibles desdits semi-tableaux.

13. Système de détection (4), en particulier un système sonar, comprenant un dispositif de traitement (8) configuré pour mettre en oeuvre les étapes dans le procédé selon l'une quelconque des revendications précédentes.

14. Système tel que revendiqué dans la revendication 13, dans lequel ledit dispositif de traitement (8) est en outre configuré pour détecter une cible (2) sur la base d'une comparaison dudit niveau de formation de faisceau avec une valeur de seuil.

15. Système tel que revendiquée dans la revendication 14, dans lequel ladite valeur de seuil est constante.

FIG. 1

START

DEFINE SEMIARRAY PAIRS —10

SAMPLE SIGNALS —11

DFT IN INTERVAL $T_0$ —12

REPHASE BIN IN BEAM DIRECTION —13

EVALUATE POINT COHERENCE OF SEMIARRAY PAIRS —14

For each pair

For each bin, beam

For each $T_0$

DETERMINE MINIMUM —16

DETERMINE COHERENCE INDEX FOR EACH BEAM —18

DETECT ALARMS —19

FIG. 2

FIG. 3

FIG. 4

FIG. 5